# EUROPÄISCHE PATENTSCHRIFT

(11) **EP 1 831 279 B1**
(45) Veröffentlichungstag und Bekanntmachung des Hinweises auf die Patenterteilung: **29.04.2015**
(21) Anmeldenummer: 05824277.7
(22) Anmeldetag: 21.12.2005
(51) Int. Cl.: C08G 18/78, C09D 175/16, C08G 18/67, C07C 275/60

(54) **STRAHLUNGSHÄRTBARE VERBINDUNGEN**
RADIATION-HARDENABLE COMPOUNDS
COMPOSES DURCISSABLES PAR RAYONNEMENT

(30) Priorität: 22.12.2004 DE 102004063102
(43) Veröffentlichungstag der Anmeldung: 12.09.2007
(73) Patentinhaber: BASF SE, 67056 Ludwigshafen (DE)
(72) Erfinder: GRUBER, Nick, 68161 Mannheim (DE); SCHWALM, Reinhold, 67157 Wachenheim (DE); BECK, Erich, 68526 Ladenburg (DE); HEISCHKEL, Yvonne, 68199 Mannheim (DE); DLUGOSCH, Gabriele, 67551 Worms (DE); THÜRY, Peter, 67069 Ludwigshafen (DE)
(74) Vertreter: Reinhardt, Jürgen
(86) Internationale Anmeldenummer: PCT/EP2005/013763
(87) Internationale Veröffentlichungsnummer: WO 2006/069690

(56) Entgegenhaltungen:
- EP-A- 0 867 457
- WO-A-00/39183
- DE-A1- 10 246 512
- DE-A1- 19 860 041

## Beschreibung

Die Erfindung betrifft strahlungshärtbare Verbindungen, Verfahren zu deren Herstellung, deren Verwendung und diese enthaltende Beschichtungsmassen mit hoher Kratzfestigkeit.

WO 00/39183 beschreibt allophanatgruppenhaltige Polyisocyanate, die radikalisch polymerisierbare, aktivierte C=C-Doppelbindungen tragen.

Nachteilig an diesen Polyisocyanaten ist, daß sie zur Härtung in Lacken ein Bindemittel benötigen, das gegenüber Isocyanat reaktive Gruppen enthalten muß. Solche weitere Komponenten müssen in einer genauen Stöchiometrie zudosiert werden, was bei Fehldosierungen Anlaß zu nicht-ausreichender Aushärtung geben kann.

DE 102 46 512 beschreibt ein unterschiedliches Verfahren zur Herstellung der gleichen Verbindungen wie in WO 00/39183 beschrieben, sowie unterschiedliche Folgeprodukte dieser Verbindungen, die zum Teil ebenfalls freie Isocyanatgruppen enthalten und somit ebenfalls durch Zudosierung eines Bindemittels in einer exakten Stöchiometrie gehärtet werden müssen. Zum Teil werden auch Folgeprodukte ohne freie Isocyanatgruppen offenbart (Beispiel 21), die ausschließlich durch Strahlungshärtung gehärtet werden können. Die dort offenbarten Folgeprodukte weisen jedoch eine ungenügende Härte und Kratzfestigkeit der erhaltenen Beschichtungen auf. Beispiel 2 der DE 102 46 512 betrifft ein hochgradig mit Hydroxyethylacrylat umgesetztes Polyisocyanat, das im wesentlichen Acrylatgruppen als härtungsaktive Gruppen enthält.

EP 867457 A1 offenbart Polyurethane, die Acrylatgruppen und Allylethergruppen als radikalisch polymerisierbare ungesättigte Gruppen enthalten.

Nachteilig an derartigen Allylethergruppen ist, daß es sich bei diesen um reaktionsträgere nicht-aktivierte Gruppen handelt, die zwar prinzipiell radikalisch polymerisierbar sind, jedoch keine Kettenfortpflanzung, sondern durch den Einbau eine Kettenterminierung bewirken.

WO 05/099943 A2 offenbart in Beispiel 5 ein Polyurethanacrylat auf Basis Allophanat aus 1,6-Hexamethylendiisocyanat, Hydroxyethylacrylat, Isocyanurat auf Basis Isophorondiisocyanat, Dicyclohexanolpropan, Hydroxyethylacrylat, Pentaerythrittri-/tetraacrylat und Methanol. Der Anteil an Dicyclohexanolpropan beträgt 40 mol% OH-Gruppen bezogen auf 100 mol% NCO-Gruppen.

Polyurethanacrylate mit nicht mehr als 30 mol% OH-Gruppen einer Verbindung mit genau zwei gegenüber Isocyanat reaktiven Gruppen werden nicht offenbart.

EP 1671995 A1 offenbart allophanatgruppenhaltige Urethan(meth)acrylate auf Basis von Polyisocyanaten, die als strahlungshärtbare Aufbaukomponente zwei unterschiedliche Verbindungen enthalten, ausgewählt aus der Gruppe bestehend aus Hydroxyethyl(meth)acrylat, Hydroxypropyl(meth)acrylat und deren Poly-(ε-caprolacton)ester.

Urethan(meth)acrylate mit verschiedenen strahlungshärtbaren Verbindungen, von denen eine mehr als eine radikalisch polymerisierbare ungesättigte Gruppen aufweist, werden nicht offenbart.

Aufgabe der vorliegenden Erfindung war es, strahlungshärtbare Verbindung niedriger Viskosität zur Verfügung zu stellen, die hauptsächlich durch Strahlung härtbar sind und höchstens untergeordnet nach anderen Härtungsmechanismen. Dabei soll es sich um einkomponentige Beschichtungsmassen handeln, um die bei Zweikomponentensystemen möglichen Fehldosierungen bei Nichteinhalten einer optimalen Stöchiometrie auszuschließen, die Beschichtungen mit hoher Härte und Kratzfestigkeit ergeben.

Die Aufgabe wurde gelöst durch allophanatgruppenhaltige Polyurethane, enthaltend als Aufbaukomponenten
(a) mindestens ein organisches aliphatisches, aromatisches oder cycloaliphatisches Di- oder Polyisocyanat,
(b) mindestens zwei unterschiedliche Verbindungen (b1) und (b2) mit jeweils mindestens einer gegenüber Isocyanat reaktiven Gruppe und mindestens einer radikalisch polymerisierbaren ungesättigten Gruppe, wobei es sich bei den radikalisch polymerisierbaren ungesättigten Gruppen um Ester von α,β-ungesättigten Carbonsäuren handelt,
(c) 0 - 30 mol% bezogen auf gegenüber Isocyanat reaktiven Gruppen mindestens einer Verbindung mit genau zwei gegenüber Isocyanat reaktiven Gruppen,
(d) gegebenenfalls mindestens eine Verbindung mit mindestens drei gegenüber Isocyanat reaktiven Gruppen und
(e) gegebenenfalls mindestens eine Verbindung mit genau einer gegenüber Isocyanat reaktiven Gruppe,
wobei die Komponente (b2) genau eine gegenüber Isocyanat reaktive Gruppe und mindestens zwei radikalisch polymerisierbare ungesättigte Gruppen aufweist.

Erfindungsgemäß enthalten die Polyurethane Allophanatgruppen, bevorzugt beträgt der Gehalt an Allophanatgruppen bei derartigen erfindungsgemäßen Polyurethanen (berechnet als C₂N₂HO₃ = 101 g/mol) 1 bis 28 Gew%, bevorzugt von 3 bis 25 Gew%. In einer bevorzugten Ausführungsform der vorliegenden Erfindung sind von den Verbindungen (b1) und (b2) mit jeweils mindestens einer gegenüber Isocyanat reaktiven Gruppe und mindestens einer radikalisch polymerisierbaren ungesättigten Gruppe, die Aufbaukomponenten der erfindungsgemäßen Polyurethane bilden, mindestens 20 mol%, bevorzugt mindestens 25 mol%, besonders bevorzugt mindestens 30 mol%, ganz besonders bevorzugt mindestens 35 mol%, insbesondere mindestens 40 mol% und speziell mindestens 50 mol% an Allophanatgruppen gebunden.

Die bei der Herstellung der erfindungsgemäßen Polyurethane erhaltenen Reaktionsgemische weisen in der Regel ein zahlenmittleres Molgewicht Mₙ von weniger als 10000 g/mol, bevorzugt von weniger als 5000 g/mol, besonders bevorzugt von weniger als 4000 und ganz besonders bevorzugt von weniger als 2000 g/mol (bestimmt durch Gelpermeationschromatographie mit Tetrahydrofuran und Polystyrol als Standard).

Um den Gehalt an Oxadiazintriongruppen zu verringern ist, wie beispielsweise in DE-A1 102 46 512 beschrieben, eine aufwendige Nachbehandlung von Polyisocyanaten notwendig, wie z.B. mehrstündiges Erhitzen im Vakuum, gegebenenfalls unterstützt durch Strippen mit einem Gasstrom. Daher ist es erfindungsgemäß bevorzugt, den Gehalt an Oxadiazintriongruppen von vornherein durch Einsatz von Oxadiazintrionarmen oder -freien Isocyanaten gering zu halten, beispielsweise in dem der Gehalt an Oxadiazintriongruppen in den eingesetzten Isocyanaten (berechnet als C₃N₂O₄ = 128 g/mol) weniger als 15 Gew%, bevorzugt weniger als 10, besonders bevorzugt weniger als 8, ganz besonders bevorzugt weniger als 5, insbesondere weniger als 2,5 und speziell weniger als 1 Gew% beträgt.

In einer bevorzugten Ausführungsform weisen die erfindungsgemäßen Polyurethane einen möglichst geringen Gehalt an Oxadiazintriongruppen auf, beispielsweise weniger als 0,7 Gew% (berechnet als C₃N₂O₄ = 128 g/mol), bevorzugt weniger als 0,6, besonders bevorzugt weniger als 0,5, besonders bevorzugt weniger als 0,3, ganz besonders bevorzugt weniger als 0,2, insbesondere weniger als 0,1 und speziell weniger als 0,05 Gew%. Dies ist insbesondere dann von Interesse, wenn in der fertigen Beschichtungsmasse neben dem erfindungsgemäßen Polyurethanen auch Bindemittel enthalten sind, die gegenüber Isocyanat reaktive Gruppen aufweisen, da durch eine Reaktion von gegenüber Isocyanat reaktive Gruppen mit Oxadiazintrionen aus diesen CO₂ freigesetzt werden kann, das in der Beschichtungsmasse Bläschen bildet und so zu Lackfehlern führen kann.

In einer weiteren bevorzugten Ausführungsform ist es für die erfindungsgemäßen Polyurethane ausreichend, wenn sie einen Gehalt an Oxadiazintriongruppen aufweisen, der zwischen 0,2 und 0,6 Gew%, bevorzugt zwischen 0,3 und 0,5, besonders bevorzugt zwischen 0,35 und 0,45 liegt (berechnet als C₃N₂O₄ = 128 g/mol). Dies ist insbesondere dann von Interesse, wenn in der fertigen Beschichtungsmasse neben dem erfindungsgemäßen Polyurethanen keine weiteren Bindemittel enthalten sind, die gegenüber Isocyanat reaktive Gruppen aufweisen. In diesem Fall besteht in der Regel keine Möglichkeit zu der oben beschriebenen Reaktion, bei der CO₂ freigesetzt werden könnte, so daß ein solcher Gehalt an Oxadiazintriongruppen in der Regel tolerierbar ist.

Der Anteil an anderen sich aus Isocyanatgruppen bildenden Gruppen, besonders Isocyanurat-, Biuret-, Uretdion-, Iminooxadiazintrion- und/oder Carbodiimidgruppen spielt erfindungsgemäß eine untergeordnete Rolle.

In einer bevorzugten Ausführungsform der Erfindung weisen die erfindungsgemäßen Polyurethane praktisch keine freien Isocyanatgruppen mehr auf, d.h. der Gehalt an freien Isocyanatgruppen beträgt weniger als 0,5 Gew%, bevorzugt weniger als 0,3, besonders bevorzugt weniger als 0,2, ganz besonders bevorzugt weniger als 0,1, insbesondere weniger als 0,05 und speziell 0 Gew%.

Als Komponente (a) kommen beispielsweise aliphatische, aromatische und cycloaliphatische Di- und Polyisocyanate mit einer NCO Funktionalität von mindestens 1,8, bevorzugt 1,8 bis 5 und besonders bevorzugt 2 bis 4 in Frage, sowie deren Isocyanurate, Biurete, Allophanate und Uretdione, bevorzugt jedoch die Diisocyanate in monomerer Form.

Der Gehalt an Isocyanatgruppen, berechnet als NCO = 42 g/mol, beträgt in der Regel von 5 bis 25 Gew%.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat(1,6-Diisocyanatohexan), Octamethylendiisocyanat, Decamethylendiisocyanat, Dodecamethylendiisocyanat, Tetradecamethylendiisocyanat, Derivate des Lysindiisocyanates, Tetramethylxylylendiisocyanat, Trimethylhexandiisocyanat oder Tetramethylhexandiisocyanat oder 3 (bzw. 4.), 8 (bzw. 9)-Bis(isocyanatomethyl)-tricyclo-[5.2.1.0^{2.6}]decan-Isomerengemische, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Es können auch Gemische der genannten Diisocyanate vorliegen.

Bevorzugt sind Hexamethylendiisocyanat, 1,3-Bis(isocyanatomethyl)cyclohexan, Isophorondiisocyanat und Di(isocyanatocyclohexyl)methan, besonders bevorzugt ist Hexamethylendiisocyanat.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können in den Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 25 Gew.-% und eine mittlere NCO-Funktionalität von 3 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemische oder bevorzugt mit mindestens einer Verbindung (b), bevorzugt 2-Hydroxyethyl(meth)acrylat, erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von mindestens 2, bevorzugt mindestens 2,1 und besonders bevorzugt 2,5 bis 3.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar. Dabei ist jedoch gegebenenfalls der oben angeführte Gehalt an Oxadiazintriongruppen zu berücksichtigen.

### Uretonimin-modifizierte Polyisocyanate.

Die Polyisocyanate 1) bis 6) können im Gemisch, gegebenenfalls auch im Gemisch mit Diisocyanaten, eingesetzt werden.

Als Komponente (b) kommen erfindungsgemäß mindestens zwei unterschiedliche Verbindungen (b1) und (b2) in Betracht, die mindestens eine gegenüber Isocyanat reaktive Gruppe und mindestens eine radikalisch polymerisierbare Gruppe tragen.

In der Erfindung handelt es sich bei der Verbindung (b1) um eine Verbindung mit genau einer gegenüber Isocyanat reaktiven Gruppe und genau einer radikalisch polymerisierbaren ungesättigten Gruppe und bei Verbindung (b2) um eine Verbindung mit genau einer gegenüber Isocyanat reaktiven Gruppe und mindestens zwei, bevorzugt zwei bis fünf, besonders bevorzugt zwei bis vier und ganz besonders bevorzugt zwei oder drei radikalisch polymerisierbaren ungesättigten Gruppen.

Bevorzugt weisen die Komponenten (b) ein Molgewicht unter 10000 g/mol auf, besonders bevorzugt unter 5000 g/mol, ganz besonders bevorzugt unter 4000 g/mol und insbesondere unter 3000 g/mol. Spezielle Verbindungen (b) weisen ein Molgewicht unter 1000 oder sogar unter 600 g/mol auf.

Gegenüber Isocyanat reaktive Gruppen können z.B. sein -OH, -SH, -NH₂ und -NHR¹, wobei R¹ Wasserstoff oder eine 1 bis 4 Kohlenstoffatome enthaltende Alkylgruppe, wie z.B. Methyl, Ethyl, n-Propyl, *iso*-Propyl, n-Butyl, *iso-*Butyl, *sek*-Butyl oder *tert*-Butyl, bedeutet.

Bei den Komponenten (b) handelt es sich um Monoester von α,β-ungesättigten Carbonsäuren, wie Acrylsäure, Methacrylsäure, Crotonsäure, Itaconsäure, Fumarsäure, Maleinsäure,

Acrylamidoglykolsäure, Methacrylamidoglykolsäure oder Vinylether mit Di- oder Polyolen sein, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,2-, 1,3- oder 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclohexyl)propan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 2000, Poly-1,3-propandiol mit einem Molgewicht zwischen 134 und 400 oder Polyethylenglykol mit einem Molgewicht zwischen 238 und 458. Weiterhin können auch Ester oder Amide der (Meth)acrylsäure mit Aminoalkoholen z. B. 2-Aminoethanol, 2-(Methylamino)-ethanol, 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin, oder Vinylessigsäure verwendet werden.

Weiterhin sind auch ungesättigte Polyether- oder Polyesterole oder Polyacrylatpolyole mit einer mittleren OH-Funktionalität von 2 bis 10 geeignet, wenn auch weniger bevorzugt.

Beispiele für Amide ethylenisch ungesättigter Carbonsäuren mit Aminoalkoholen sind Hydroxyalkyl(meth)acrylamide wie N-Hydroxymethylacrylamid, N-Hydroxymethylmethacrylamid, N-Hydroxyethylacrylamid, N-Hydroyxethylmethacrylamid, 5-Hydroxy-3-oxapentyl(meth)acrylamid, N-Hydroxyalkylcrotonamide wie N-Hydroxymethylcrotonamid oder N-Hydroxyalkylmaleinimide wie N-Hydroxyethylmaleinimid.

Bevorzugt verwendet werden 2-Hydroxyethyl(meth)acrylat, 2- oder 3-Hydroxypropyl-(meth)acrylat, 1,4-Butandiolmono(meth)acrylat, Neopentylglykolmono(meth)acrylat, 1,5-Pentandiolmono(meth)acrylat, 1,6-Hexandiolmono(meth)acrylat, Glycerinmono- und di(meth)acrylat, Trimethylolpropanmono- und di(meth)acrylat, Pentaerythritmono-, -di- und -tri(meth)acrylat sowie 4-Hydroxybutylvinylether, 2-Aminoethyl(meth)acrylat, 2-Aminopropyl(meth)acrylat, 3-Aminopropyl(meth)acrylat, 4-Aminobutyl(meth)acrylat, 6-Aminohexyl(meth)acrylat, 2-Thioethyl(meth)acrylat, 2-Aminoethyl(meth)acrylamid, 2-Aminopropyl(meth)acrylamid, 3-Aminopropyl(meth)acrylamid, 2-Hydroxyethyl(meth)-acrylamid, 2-Hydroxypropyl(meth)acrylamid oder 3-Hydroxypropyl(meth)acrylamid. Besonders bevorzugt sind 2-Hydroxyethylacrylat, 2-Hydroxyethylmethacrylat, 2- oder 3-Hydroxypropylacrylat, 1,4-Butandiolmonoacrylat, 3-(Acryloyloxy)-2-hydroxypropyl-(meth)acrylat sowie die Monoacrylate von Polyethylenglykol der Molmasse von 106 bis 238.

In einer bevorzugten Ausführungsform ist die Komponente (b1) ausgewählt aus der Gruppe bestehend aus 2-Hydroxyethylacrylat, 2-Hydroxyethylmethacrylat, 2- oder 3-Hydroxypropylacrylat und 1,4-Butandiolmonoacrylat, bevorzugt aus 2-Hydroxyethylacrylat und 2-Hydroxyethylmethacrylat und besonders bevorzugt handelt es sich um 2-Hydroxyethylacrylat, und die Komponente (b2) ist ausgewählt aus der Gruppe bestehend aus dem 1,2- oder 1,3-Diacrylat von Glycerin, Trimethylolpropandiacrylat, Pentaerythrittriacrylat, Ditrimethylolpropantriacrylat und Dipentaerythritpentaacrylat.

In einer besonders bevorzugten Ausführungsform handelt es sich bei der Komponente (b2) um technische Gemische der Acrylierung von Trimethylolpropan, Pentaerythrit, Ditrimethylolpropan oder Dipentaerythrit. Dabei handelt es sich zumeist um Gemische vollständig und unvollständig acrylierter Polyole. Ganz besonders bevorzugt sind als Verbindungen (b2) technische Gemische der Acrylierung von Pentaerythrit, die zumeist eine OH-Zahl gemäß DIN 53240 von 99 bis 115 mg KOH/g aufweisen und überwiegend aus Pentaerythrittriacrylat und Pentaerythrittetraacrylat bestehen, sowie untergeordnete Mengen von Pentaerythritdiacrylat enthalten können. Dies hat den Vorteil, daß Pentaerythrittetraacrylat nicht in das erfindungsgemäße Polyurethan eingebaut wird, sondern gleichzeitig als Reaktiwerdünner fungiert.

Als Komponente (c) kommen Verbindungen in Mengen von 0 - 30 mol% bezogen auf gegenüber Isocyanat reaktiven Gruppen in Betracht, die genau zwei gegenüber Isocyanat reaktive Gruppen, beispielsweise -OH, -SH, -NH₂ oder -NHR², worin R² darin unabhängig voneinander Wasserstoff, Methyl, Ethyl, *iso-*Propyl, n-Propyl, n-Butyl, *iso-*Butyl, *sek*-Butyl oder *tert-*Butyl bedeuten kann, aufweisen.

Dies sind bevorzugt 2 bis 20 Kohlenstoffatome aufweisende Diole, z.B. Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3-oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Poly-THF mit einer Molmasse zwischen 162 und 2000, Poly-1,2-propandiol oder Poly-1,3-propandiol mit einer Molmasse zwischen 134 und 1178 oder Polyethylenglykol mit einer Molmasse zwischen 106 und 2000 sowie aliphatische Diamine, wie Methylen-, und Isopropyliden-bis-(cyclohexylamin), Piperazin, 1,2-, 1,3- oder 1,4-Diaminocyclohexan, 1,2-, 1,3- der 1,4-Cyclohexan-bis-(methylamin), etc., Dithiole oder mehrfunktionelle Alkohole, sekundäre oder primäre Aminoalkohole, wie Ethanolamin, Monopropanolamin etc. oder Thioalkohole, wie Thioethylenglykol.

Besonders geeignet sind hier die cycloaliphatischen Diole, wie z.B. Bis-(4-hydroxycyclohexan) isopropyliden, Tetramethylcyclobutandiol, 1,2-, 1,3- oder 1,4-Cyclohexandiol, 1,1-, 1,2-, 1,3- und 1,4-Cyclohexandimethanol, Cyclooctandiol oder Norbornandiol.

Bei den optionalen Komponenten (d) handelt es sich um mindestens eine Verbindung mit mindestens drei gegenüber Isocyanat reaktiven Gruppen.

Beispielsweise können die Komponenten (d) 3 bis 6, bevorzugt 3 bis 5, besonders bevorzugt 3 bis 4 und ganz besonders bevorzugt 3 gegenüber Isocyanat reaktiven Gruppen aufweisen.

Das Molekulargewicht der Komponenten (d) beträgt in der Regel nicht mehr als 2000 g/mol, bevorzugt nicht mehr als 1500 g/mol, besonders bevorzugt nicht mehr als 1000 g/mol und ganz besonders bevorzugt nicht mehr als 500 g/mol.

Dies sind bevorzugt 2 bis 20 Kohlenstoffatome aufweisende Polyole, beispielsweise Trimethylolbutan, Trimethylolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, besonders bevorzugt sind Trimethylolpropan, Pentaerythrit und Glycerin und ganz besonders bevorzugt Trimethylolpropan.

Optionale Komponenten (e) sind solche mit gegebenenfalls mindestens einer Verbindung mit genau einer gegenüber Isocyanat reaktiven Gruppe.

Dabei handelt es sich bevorzugt um Monoole, besonders bevorzugt um Alkanole und ganz besonders bevorzugt um Alkanole mit 1 bis 20, bevorzugt 1 bis 12, besonders bevorzugt 1 bis 6, ganz besonders bevorzugt 1 bis 4 und insbesondere 1 bis 2 Kohlenstoffatome.

Beispiele dafür sind Methanol, Ethanol, *iso*-Propanol, n-Propanol, n-Butanol, iso-Butanol, *sek-*Butanol, *tert*-Butanol, n-Hexanol, n-Heptanol, n-Octanol, n-Decanol, n-Dodecanol (Laurylalkohol), 2-Ethylhexanol, Cyclopentanol, Cyclohexanol, Cyclooctanol, Cyclododecanol, Ethylenglykolmonomethylether, Ethylenglykolmonoethylether, Diethylenglykol, 1,3-Propandiolmonomethylether, bevorzugt sind Methanol, Ethanol, *iso-*Propanol, n-Propanol, n-Butanol, *tert*-Butanol, n-Hexanol, 2-Ethylhexanol, Cyclopentanol, Cyclohexanol, und Cyclododecanol, besonders bevorzugt sind Methanol, Ethanol, *iso-*Propanol, n-Propanol, n-Butanol und *tert*-Butanol, ganz besonders bevorzugt sind Methanol und Ethanol und insbesondere Methanol.

In einer bevorzugten Ausführungsform kann es sich bei den Monoolen um die genannten cycloaliphatischen Alkohole handeln, bevorzugt um Cyclopentanol oder Cyclohexanol, besonders bevorzugt um Cyclohexanol.

In einer weiteren bevorzugten Ausführungsform kann es sich bei den Monoolen um die genannten aliphatischen Alkohole mit 6 bis 20 Kohlenstoffatomen handeln, besonders bevorzugt um solche mit 8 bis 20 Kohlenstoffatomen, ganz besonders bevorzugt um solche mit 10 bis 20 Kohlenstoffatomen.

In einer besonders bevorzugten Ausführungsform handelt es sich bei den Monoolen um die genannten aliphatischen Alkohole handeln, ganz besonders bevorzugt um die mit 1 bis 4 Kohlenstoffatomen, insbesondere Methanol.

Die erfindungsgemäß verwendbaren Polyurethane werden durch Reaktion der Komponenten (a), (b1) und (b2) sowie gegebenenfalls (c) und/oder (d) und/oder (e) miteinander erhalten.

Dabei ist die molare Zusammensetzung (a):(b1):(b2):(c):(d):(e) pro 1 mol reaktive Isocycanatgruppen in (a) in der Regel wie folgt:
(b1) 1 - 50, bevorzugt 5 - 40, besonders bevorzugt 10 - 37,5 und insbesondere
   15 - 33 mol% an gegenüber Isocyanat reaktive Gruppen,
(b2) 1 - 50, bevorzugt 5 - 40, besonders bevorzugt 10 - 33 und insbesondere
   15 - 25 mol% an gegenüber Isocyanat reaktive Gruppen,
(c) 0 - 30, besonders bevorzugt 0 - 25 und insbesondere
   0 - 20 mol% an gegenüber Isocyanat reaktiven Gruppen,
(d) 0 - 10, bevorzugt 0 - 5, besonders bevorzugt 0 - 3 und insbesondere
   0 - 2 mol% an gegenüber Isocyanat reaktiven Gruppen,
(e) 0 - 5, bevorzugt 0 - 4, besonders bevorzugt 0 - 3 und insbesondere
   0 - 2 mol% an gegenüber Isocyanat reaktiven Gruppen,
mit der Maßgabe, daß die Summe der gegenüber Isocyanat reaktiven Gruppen der Anzahl der Isocyanatgruppen in (a) entspricht.

Die Bildung des Addukts aus isocyanatgruppenhaltiger Verbindung und der Verbindung, die gegenüber Isocyanatgruppen reaktive Gruppen enthält erfolgt in der Regel durch Mischen der Komponenten in beliebiger Reihenfolge, gegebenenfalls bei erhöhter Temperatur.

Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

Besonders bevorzugt wird die isocyanatgruppenhaltige Verbindung vorgelegt und die Verbindungen, die gegenüber Isocyanat reaktive Gruppen enthalten, zugegeben. Insbesondere wird die isocyanatgruppenhaltige Verbindung (a) vorgelegt und daraufhin (b1) und/oder (b2), bevorzugt (b1) zugegeben. Nachfolgend können gegebenenfalls gewünschte weitere Komponenten zugegeben werden.

In der Regel wird die Reaktion bei Temperaturen zwischen 5 und 100 °C, bevorzugt zwischen 20 bis 90 °C und besonders bevorzugt zwischen 40 und 80°C und insbesondere zwischen 60 und 80 °C durchgeführt.

Bevorzugt wird dabei unter wasserfreien Bedingungen gearbeitet.

Wasserfrei bedeutet dabei, daß der Wassergehalt im Reaktionssystem nicht mehr als 5 Gew% beträgt, bevorzugt nicht mehr als 3 Gew% und besonders bevorzugt nicht mehr als 1 Gew%, ganz besonders bevorzugt nicht mehr als 0.75 und insbesondere nicht mehr als 0,5 Gew%.

Bevorzugt wird die Reaktion in Gegenwart mindestens eines sauerstoffhaltigen Gases durchgeführt, z.B. Luft oder Luft-Stickstoff-Gemische oder Gemische aus Sauerstoff oder einem sauerstoffhaltigen Gas mit einem unter den Reaktionsbedingungen inerten Gas, die einen Sauerstoffgehalt unter 15, bevorzugt unter 12, besonders bevorzugt unter 10, ganz besonders bevorzugt unter 8 und insbesondere unter 6 Vol% aufweisen.

Die Reaktion kann auch in Gegenwart eines inerten Solvens durchgeführt werden, z.B. Aceton, *Iso*-butyl-methylketon, Toluol, Xylol, Butylacetat, Methoxypropylacetat oder Ethoxyethylacetat. Bevorzugt wird die Reaktion jedoch in Abwesenheit eines Solvens durchgeführt.

In einer bevorzugten Ausführungsform wird die Umsetzung von (a) mit (b1) und/oder (b2), bevorzugt (a) und (b1) unter Allophanatisierungsbedingungen durchgeführt.

In einer weiteren bevorzugten Ausführungsform werden solche Verbindungen eingesetzt, wie in der WO 00/39183, S.4, Z. 3 bis S. 10, Z. 19 beschrieben, deren Offenbarung hiermit Bestandteil der vorliegenden Schrift sei. Besonders bevorzugt sind unter diesen solche Verbindungen, die als Aufbaukomponenten mindestens ein Allophanatgruppen aufweisendes, (cyclo)aliphatisches Isocyanat und mindestens ein Hydroxyalkyl(meth)acrylat aufweisen, ganz besonders bevorzugt die Produkt Nr. 1 bis 9 in Tabelle 1 auf S. 24 der WO 00/39183.

Die erfindungsgemäßen Polyurethane können verwendet werden zur Beschichtung von verschiedenen Substraten, wie z. B. Holz, Holzfurnier, Papier, Pappe, Karton, Textil, Leder, Vlies, Kunststoffoberflächen, Glas, Keramik, mineralische Baustoffe, Metalle oder beschichtete Metalle.

Bei einer Verwendung in Beschichtungsmitteln können die erfindungsgemäßen Polyurethane insbesondere in Grundierungen, Füllern, pigmentierten Decklacken und Klarlacken im Bereich Autoreparatur- oder Großfahrzeuglackierung eingesetzt werden. Besonders geeignet sind solche Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Ein weiterer Gegenstand der vorliegenden Erfindung sind strahlungshärtbare Beschichtungsmassen, enthaltend
- mindestens ein erfindungsgemäßes Polyurethan,
- gegebenenfalls mindestens eine Verbindung mit einer oder mehr als einer radikalisch polymerisierbaren Doppelbindung,
- gegebenenfalls mindestens einen Photoinitiator und
- gegebenenfalls weitere lacktypische Additive.

Die erfindungsgemäßen Polyurethane können als alleiniges Bindemittel oder in Kombination mit einem weiteren radikalisch polymerisierbaren Verbindung verwendet werden.

Verbindungen mit einer oder mehr als einer radikalisch polymerisierbaren Doppelbindung sind beispielsweise solche Verbindungen, die 1 bis 6, bevorzugt 1 bis 4 und besonders bevorzugt 1 bis 3 radikalisch polymerisationsfähige Gruppen aufweisen.

Radikalisch polymerisationsfähige Gruppen sind beispielsweise Vinylether- oder (Meth)Acrylat-Gruppen, bevorzugt (Meth)Acrylat-Gruppen und besonders bevorzugt Acrylat-Gruppen.

Radikalisch polymerisationsfähige Verbindungen werden häufig unterteilt in monofunktionelle (Verbindung mit einer radikalisch polymerisierbaren Doppelbindung) und multifunktionelle (Verbindung mit mehr als einer radikalisch polymerisierbaren Doppelbindung), polymerisationsfähige Verbindungen.

Monofunktionelle, polymerisationsfähige Verbindungen sind solche mit genau einer radikalisch polymerisationsfähigen Gruppe, multifunktionelle, polymerisationsfähige Verbindungen solche mit mehr als einer, bevorzugt mit mindestens zwei radikalisch polymerisationsfähigen Gruppen.

Monofunktionelle, polymerisationsfähige Verbindungen sind beispielsweise Ester der (Meth)acrylsäure mit Alkoholen, die 1 bis 20 C-Atome aufweisen, z.B. (Meth)acrylsäuremethylester, (Meth)acrylsäureethylester, (Meth)acrylsäurebutylester, (Meth)acrylsäure-2-ethylhexylester, 2-Hydroxyethyl(meth)acrylat, 2-Hydroxypropyl(meth)acrylat, 4-Hydroxybutyl(meth)acrylat, Dihydrodicyclopentadienylacrylat, Vinylaromatische Verbindungen, z.B. Styrol, Divinylbenzol, α,β-ungesättigte Nitrile, z.B. Acrylnitril, Methacrylnitril, α,β-ungesättigte Aldehyde, z.B. Acrolein, Methacrolein, Vinylester, z.B. Vinylacetat, Vinylpropionat, halogenierte ethylenisch ungesättigte Verbindungen, z.B. Vinylchlorid, Vinylidenchlorid, konjugierte ungesättigte Verbindungen, z.B. Butadien, Isopren, Chloropren, einfach ungesättigte Verbindungen, z.B. Ethylen, Propylen, 1-Buten, 2-Buten, iso-Buten, cyclische einfach ungesättigte Verbindungen, z.B. Cyclopenten, Cyclohexen, Cyclododecen, N-Vinylformamid, Allylessigsäure, Vinylessigsäure, monoethylenisch ungesättigten Carbonsäuren mit 3 bis 8 C-Atomen sowie deren wasserlöslichen Alkalimetall-, Erdalkalimetall- oder Ammoniumsalze wie beispielsweise: Acrylsäure, Methacrylsäure, Dimethylacrylsäure, Ethacrylsäure, Maleinsäure, Citraconsäure, Methylenmalonsäure, Crotonsäure, Fumarsäure, Mesaconsäure und Itaconsäure, Maleinsäure, N-Vinylpyrrolidon, N-Vinyllactame, wie z.B. N-Vinylcaprolactam, N-Vinyl-N-Alkyl-carbonsäureamide oder N-Vinyl-carbonsäureamide, wie z. B. N-Vinylacetamid, N-Vinyl-N-methylformamid und N-Vinyl-N-methylacetamid oder Vinylether, z.B. Methylvinylether, Ethylvinylether, n-Propylvinylether, *iso*-Propylvinylether, n-Butylvinylether, *sek*-Butylvinylether, *iso*-Butylvinylether, *tert-*Butylvinylether, 4-Hydroxybutylvinylether, sowie Gemische davon.

Unter diesen bevorzugt sind die Ester der (Meth)Acrylsäure, besonders bevorzugt sind (Meth)acrylsäuremethylester, (Meth)acrylsäureethylester, (Meth)acrylsäure-n-butylester, (Meth)acrylsäure-2-ethylhexylester und 2-Hydroxyethylacrylat, ganz besonders bevorzugt sind (Meth)acrylsäure-n-butylester, (Meth)acrylsäure-2-ethylhexylester und 2-Hydroxyethylacrylat und insbesondere 2-Hydroxyethylacrylat.

(Meth)Acrylsäure steht in dieser Schrift für Methacrylsäure und Acrylsäure, bevorzugt für Acrylsäure.

Multifunktionelle, polymerisationsfähige Verbindungen sind bevorzugt multifunktionelle (Meth)acrylate, die mehr als 1, bevorzugt 2 - 10, besonders bevorzugt 2 - 6, ganz besonders bevorzugt 2 - 4 und insbesondere 2 - 3 (Meth)acrylatgruppen, bevorzugt Acrylatgruppen tragen.

Dies können beispielsweise Ester der (Meth)acrylsäure mit entsprechend mindestens zweiwertigen Polyalkoholen sein.

Derartige Polyalkohole sind beispielsweise mindestens zweiwertige Polyole, Polyether- oder Polyesterole oder Polyacrylatpolyole mit einer mittleren OH-Funktionalität von mindestens 2, bevorzugt 3 bis 10, geeignet.

Beispiele für multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat, Trimethylolpropantriacrylat, Ditrimethylolpropanpenta- oder -hexaacrylat, Pentaerythrittri- oder -tetraacrylat, Glycerindi- oder -triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt, oder von Polyesterpolyolen, Polyetherolen, Poly-THF mit einer Molmasse zwischen 162 und 2000, Poly-1,3-Propandiol mit einer Molmasse zwischen 134 und 1178, Polyethylenglykol mit einer Molmasse zwischen 106 und 898, sowie Epoxy(meth)acrylate, Urethan(meth)acrylate oder Polycarbonat(meth)acrylate.

Weitere Beispiele sind (Meth)Acrylate von Verbindungen der Formel (VIIIa) bis (VIIIc), 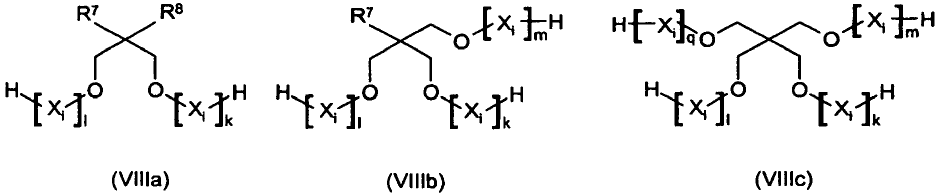 worin
R⁷ und R⁸ unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
k, l, m, q unabhängig voneinander je für eine ganze Zahl von 1 bis 10, bevorzugt 1 bis 5 und besonders bevorzugt 1 bis 3 steht und
jedes Xᵢ für i = 1 bis k, 1 bis l, 1 bis m und 1 bis q unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Bevorzugt handelt es sich dabei um (Meth)Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Bevorzugte multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,6-Hexandioldiacrylat, Trimethylolpropantriacrylat, Pentaerythrittetraacrylat, Polyestepolyolenacrylate, Polyetherolacrylate und Triacrylat von ein- bis zwanzigfach alkoxyliertem, besonders bevorzugt ethoxyliertem Trimethylolpropan.

Ganz besonders bevorzugte multifunktionelle, polymerisationsfähige Verbindungen sind 1,4-Butandioldiacrylat, 1,6-Hexandioldiacrylat, Trimethylolpropantriacrylat, Pentaerythrittetraacrylat und Triacrylat von ein- bis zwanzigfach ethoxyliertem Trimethylolpropan.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:

Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden. Weiterhin kann es sich bei der multifunktionellen, polymerisationsfähigen Verbindung um Urethan(meth)acrylate, Epoxy(meth)acrylate oder Carbonat(meth)acrylate handeln.

Urethan(meth)acrylate sind z.B. erhältlich durch Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen. In Wasser ohne Zusatz von Emulgatoren dispergierbare Urethan(meth)acrylate enthalten zusätzlich noch ionische und/oder nichtionische hydrophile Gruppen, welche z.B. durch Aufbaukomponenten wie Hydroxycarbonsäuren ins Urethan eingebracht werden.

Derartige Urethan(meth)acrylate enthalten als Aufbaukomponenten im wesentlichen:
(a) mindestens ein organisches aliphatisches, aromatisches oder cycloaliphatisches Di- oder Polyisocyanat,
(b) mindestens eine Verbindung mit mindestens einer gegenüber Isocyanat reaktiven Gruppe und mindestens einer radikalisch polymerisierbaren ungesättigten Gruppe und
(c) gegebenenfalls mindestens eine Verbindung mit mindestens zwei gegenüber Isocyanat reaktiven Gruppen.

Die Komponenten (a), (b) und (c) können die gleichen sein, wie oben für die erfindungsgemäßen Polyurethane beschrieben.

Die Urethan(meth)acrylate haben vorzugsweise ein zahlenmittleres Molgewicht Mₙ von 500 bis 20 000, insbesondere von 500 bis 10 000 besonders bevorzugt 600 bis 3000 g/mol (bestimmt durch Gelpermeationschromatographie mit Tetrahydrofuran und Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.

Epoxid(meth)acrylate sind erhältlich durch Umsetzung von Epoxiden mit (Meth)acrylsäure. Als Epoxide in Betracht kommen z.B epoxidierte Olefine, aromatische Glycidylether oder aliphatische Glycidylether, bevorzugt solche von aromatischen oder aliphatischen Glycidylethern.

Epoxidierte Olefine können beispielsweise sein Ethylenoxid, Propylenoxid, iso-Butylenoxid, 1-Butenoxid, 2-Butenoxid, Vinyloxiran, Styroloxid oder Epichlorhydrin, bevorzugt sind Ethylenoxid, Propylenoxid, *iso*-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin.

Aromatische Glycidylether sind z.B. Bisphenol-A-diglycidylether, Bisphenol-F-diglycidylether, Bisphenol-B-diglycidylether, Bisphenol-S-diglycidylether, Hydrochinondiglycidylether, Alkylierungsprodukte von Phenol/Dicyclopentadien, z.B. 2,5-bis[(2,3-E-poxypropoxy)phenyl]octahydro-4,7-methano-5H-inden) (CAS-Nr. [13446-85-0]), Tris[4-(2,3-epoxypropoxy)phenyl]methan Isomere)CAS-Nr. [66072-39-7]), Phenol basierte Epoxy Novolake (CAS-Nr. [9003-35-4]) und Kresol basierte Epoxy Novolake (CAS-Nr. [37382-79-9]).

Aliphatische Glycidylether sind beispielsweise 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol (α,ω-rbis(2,3-epoxypropoxy)poly(oxypropylen) (CAS-Nr. [16096-30-3]) und von hydriertem Bisphenol A (2,2-bis[4-(2,3-epoxypropoxy)cyclohexyl]propan, CAS-Nr. [13410-58-7]).

Die Epoxid(meth)acrylate und -vinylether haben vorzugsweise ein zahlenmittleres Molgewicht Mₙ von 200 bis 20000, besonders bevorzugt von 200 bis 10000 g/mol und ganz besonders bevorzugt von 250 bis 3000 g/mol; der Gehalt an (Meth)acryl- oder Vinylethergruppen beträgt vorzugsweise 1 bis 5, besonders bevorzugt 2 bis 4 pro 1000 g Epoxid(meth)acrylat oder Vinyletherepoxid (bestimmt durch Gelpermeationschromatographie mit Polystyrol als Standard und Tetrahydrofuran als Elutionsmittel).

Carbonat(meth)acrylate enthalten im Mittel vorzugsweise 1 bis 5, insbesondere 2 bis 4, besonders bevorzugt 2 bis 3 (Meth)acrylgruppen und ganz besonders bevorzugt 2(Meth)acrylgruppen.

Das zahlenmittlere Molekulargewicht Mₙ der Carbonat(meth)acrylate ist vorzugsweise kleiner 3000 g/mol, besonders bevorzugt kleiner 1500 g/mol, besonders bevorzugt kleiner 800 g/mol (bestimmt durch Gelpermeationschromatgraphie mit Polystyrol als Standard, Lösemittel Tetrahydrofuran).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)-acrylsäure oder auch Umesterung mit (Meth)acrylsäureestern, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

In analoger Weise sind auch Vinylethercarbonate erhältlich, indem man einen Hydroxyalkylvinylether mit Kohlensäureestern sowie gegebenenfalls zweiwertigen Alkoholen umsetzt.

Denkbar sind auch (Meth)acrylate oder Vinylether von Polycarbonatpolyolen, wie das Reaktionsprodukt aus einem der genannten Di- oder Polyole und einem Kohlensäureester sowie einem hydroxylgruppenhaltigen (Meth)acrylat oder Vinylether.

Geeignete Kohlensäureester sind z.B. Ethylen-, 1,2- oder 1,3-Propylencarbonat, Kohlensäuredimethyl-, -diethyl- oder -dibutylester.

Geeignete hydroxygruppenhaltige (Meth)acrylate sind beispielsweise 2-Hydroxyethyl-(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat.

Geeignete hydroxygruppenhaltige Vinylether sind z.B. 2-Hydroxyethylvinylether und 4-Hydroxybutylvinylether.

Besonders bevorzugte Carbonat(meth)acrylate sind solche der Formel: 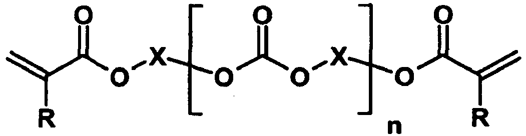 worin R für H oder CH₃, X für eine C₂-C₁₈ Alkylengruppe und n für eine ganze Zahl von 1 bis 5, vorzugsweise 1 bis 3 steht.

R steht vorzugsweise für H und X steht vorzugsweise für C₂- bis C₁₀-Alkylen, beispielsweise 1,2-Ethylen, 1,2-Propylen, 1,3-Propylen, 1,4-Butylen oder 1,6-Hexylen, besonders bevorzugt für C₄- bis C₈-Alkylen. Ganz besonders bevorzugt steht X für C₆-Alkylen.

Vorzugsweise handelt es sich bei den Carbonat(meth)acrylaten um aliphatische Carbonat(meth)acrylate.

Unter den multifunktionellen, polymerisationsfähigen Verbindung sind Urethan(meth)-acrylate besonders bevorzugt.

Ein weiterer Gegenstand der vorliegenden Erfindung sind strahlungshärtbare Beschichtungsmasse, enthaltend
- mindestens ein erfindungsgemäßes Polyurethan in dem freie Isocyanatgruppen enthalten sind,
- mindestens eine Verbindung mit einer oder mehr als einer radikalisch polymerisierbaren Doppelbindung,
- gegebenenfalls mindestens einen Photoinitiator,
- mindestens eine Verbindungen mit mehr als einer Hydroxy- und/oder Aminogruppe,
- gegebenenfalls mindestens eine Verbindungen mit einer Hydroxy- oder Aminogruppe,
- gegebenenfalls mindestens eine organometallische Zinnverbindung oder mindestens eine Cäsiumverbindung und
- gegebenenfalls weitere lacktypische Additive.

Photoinitiatoren können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin^{®} TPO der BASF AG), Ethyl-2,4,6-trimethylbenzoylphenylphosphinat (Lucirin^{®} TPO L der BASF AG), Bis-(2,4,6-trimethylbenzoyl)-phenylphosphinoxid (Irgacure® 819 der Firma Ciba Spezialitätenchemie), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, *tert*-Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-*iso*-propylthioxanthon, 2,4-Dichlorthioxanthon, Benzoin, Benzoin-*iso*-butylether, Chloroxanthenon, Benzointetrahydropyranylether, Benzoin-methylether, Benzoin-ethylether, Benzoin-butylether, Benzoin-*iso*-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert*-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-dimethylacetophenon und 2,2-Dimethoxy-2-phenylacetophenon. Verbindungen mit mehr als einer Hydroxy- und/oder Aminogruppe sind beispielsweise die oben genannten Polyesterole, Polyetherole oder Polyacrylatpolyole.

Weiterhin kommen in Betracht Polyamine in Betracht. Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan oder höhere Amine wie Triethylentetramin, Tetraethylenpentamin oder polymere Amine wie Polyethylen-amine, hydrierte Poly-Acrylnitrile oder zumindest teilweise hydrolysierte Poly-N-Vinylformamide jeweils mit einem Molgewicht bis zu 2000, bevorzugt bis zu 1000 g/mol.

Ferner können zum Kettenabbruch in untergeordneten Mengen Verbindungen mit einer Hydroxy- oder Aminogruppe eingesetzt werden. Sie dienen hauptsächlich zur Begrenzung des Molgewichts. Beispiele für Monoalkohole sind Methanol, Ethanol, iso-Propanol, n-Propanol, n-Butanol, iso-Butanol, sek-Butanol, tert-Butanol, Ethylenglykolmonomethylether, Ethylenglykolmonoethylether, 1,3-Propandiolmonomethylether, n-Hexanol, n-Heptanol, n-Octanol, n-Decanol, n-Dodecanol (Laurylalkohol) und 2-Ethylhexanol. Beispiele für Monoamine sind Methylamin, Ethylamin, *iso*-Propylamin, n-Propylamin, n-Butylamin, *iso*-Butylamin, *sek*-Butylamin, *tert*-Butylamin, n-Pentylamin, n-Hexylamin, n-Heptylamin, n-Octylamin, n-Decylamin, n-Dodecylamin, 2-Ethylhexylamin, Stearylamin, Cetylamin oder Laurylamin.

Als weitere lacktypische Additive können beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis-*iso*-butyronitril, Cyclohexylsulfonylacetylperoxid, Di-*iso*-propylpercarbonat, *tert*-Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin^{®} -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Die Beschichtung der Substrate mit den erfindungsgemäßen Beschichtungsmassen erfolgt nach üblichen, dem Fachmann bekannten Verfahren, wobei man eine erfindungsgemäße Beschichtungsmasse oder eine solche enthaltend Lackformulierung auf das zu beschichtende Substrat in der gewünschten Stärke aufbringt und gegebenenfalls trocknet. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen. Der Auftrag des Beschichtungsmittels kann auch elektrostatisch in Form von Pulver erfolgen (Pulverlacke). Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man das eine erfindungsgemäßen Beschichtungsmasse oder eine solche enthaltende Lackformulierung, gegebenenfalls mit weiteren lacktypischen Additiven und thermisch, chemisch oder starhlungshärtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 160°C, bevorzugt zwischen 60 und 160 °C, thermisch behandelt.

Die Strahlungshärtung erfolgt mit energiereichem Licht, z.B. UV-Licht oder Elektronenstrahlen. Die Strahlungshärtung kann bei höheren Temperaturen erfolgen. Bevorzugt ist dabei eine Temperatur oberhalb der T_{g} des strahlungshärtbaren Bindemittels.

Strahlungshärtung heißt hier die radikalische Polymerisation von polymerisierbaren Verbindungen infolge einer elektromagnetischen und/oder korpuskularen Strahlung, bevorzugt UV-Licht im Wellenlängenbereich von λ=200 bis 700 nm und/oder Elektronenstrahlung im Bereich von 150 bis 300 keV und besonders bevorzugt mit einer Strahlungsdosis von mindestens 80, bevorzugt 80 bis 3000 mJ/cm².

Neben einer Strahlungshärtung können noch weitere Härtungsmechanismen involviert sein, beispielsweise thermische-, Feuchtigkeits-, chemische und/oder oxidative Härtung.

Die Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren ein- oder mehrfach appliziert werden.

Die Beschichtungsstärke liegt in der Regel in einem Bereich von etwa 3 bis 1000 g/m² und vorzugsweise 10 bis 200 g/m².

Die Trocknung und Aushärtung der Beschichtungen erfolgt im allgemeinen unter normalen Temperaturbedingungen, d.h. ohne Erhitzung der Beschichtung. Die erfindungsgemäßen Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden. Dies ist begrenzt durch die Thermostabilität des Substrats.

Weiterhin wird ein Verfahren zum Beschichten von Substraten offenbart, bei dem man die erfindungsgemäße Beschichutngsmasse oder solche enthaltende Lackformulierungen, gegebenenfalls mit thermisch härtbaren Harzen versetzt, auf das Substrat aufbringt, trocknet, und anschließend mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur.

Das Verfahren zum Beschichten von Substraten kann auch so durchgeführt werden, daß nach dem Aufbringen der erfindungsgemäßen Beschichtungsmasse oder Lackformulierungen zunächst mit Elektronenstrahlen oder UV Belichtung unter Sauerstoff oder bevorzugt unter Inertgas bestrahlt wird, um eine Vorhärtung zu erzielen, anschließend bei Temperaturen bis zu 160°C, bevorzugt zwischen 60 und 160°C, thermisch behandelt und anschließend mit Elektronenstrahlen oder UV Belichtung unter Sauerstoff oder bevorzugt unter Inertgas endhärtet.

Gegebenenfalls kann, wenn mehrere Schichten des Beschichtungsmittels übereinander aufgetragen werden, nach jedem Beschichtungsvorgang eine Trocknung und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Trocknung und/oder thermische Behandlung kann auch zusätzlich zur oder anstelle der thermischen Behandlung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Soweit auch Vernetzer enthalten sind, die eine zusätzliche thermische Vernetzung bewirken, z.B. Isocyanate, kann z.B. gleichzeitig oder auch nach der Strahlungshärtung die thermische Vernetzung durch Temperaturerhöhung auf bis zu 150°C, vorzugsweise bis zu 130°C durchgeführt werden.

Die erfindungsgemäßen Polyurethane weisen eine hohe Kratzfestigkeit auf, was sich auch in einem hohen Glanz nach einer mechanischen Beanspruchung ausdrückt. Wenn geringere Anforderungen an die Kratzfestigkeit gestellt werden, kann alternativ oder zusätzlich die Flexibilität durch Auswahl der Komponente (c) auf den gewünschten Wert eingestellt werden.

Es stellt einen weiteren Vorteil der vorliegenden Erfindung dar, dass ein bei dem Auftragen der strahlungshärtbaren Beschichtungsmasse anfallender overspray nahezu vollständig zurückführt und von neuem eingesetzt werden kann, wohingegen eine Dual-Cure-Beschichtungsmasse aufgrund der begrenzten Topfzeit nur begrenzt rückführbar ist.

In dieser Schrift verwendete ppm- und Prozentangaben beziehen sich, falls nicht anders angegeben, auf Gewichtsprozente und -ppm.

Die folgenden Beispiele sollen die Erfindung erläutern, aber nicht auf diese Beispiele einschränken.

### Beispiele

Als Polyisocyanat wurde in den nachfolgenden Beispielen ein allophanatgruppenhaltiges Polyisocyanat aus 1,6-Hexamethylendiisocyanat und 2-Hydroxyethylacrylat analog Beispiel 1 der WO 00/39183 hergestellt, so daß ein Polyisocyanat mit einem NCO-Gehalt nach destillativer Abtrennung des unumgesetzten monomeren 1,6-Hexamethylendiisocyanat von 15,1 Gew% (Restmonomerengehalt < 0,5 Gew%), einer Viskosität von 940 mPas bei 23 °C, einem mittleren Molekulargewicht von ca. 800 g/mol und einer via ¹H-NMR bestimmten Doppelbindungsdichte von 2 mol/kg erhalten wurde.

### Beispiel 1

In einem Dreihalskolben mit Rückflusskühler und Rührer wurden 54,54 g allophanatgruppenhaltiges Polyisocyanat, 113,35 g Pentaerythrit tri/tetra acrylat (Handelsprodukt der Firma UCB, OH-Zahl = 99 mg KOH/g), 0,08 g Methylhydrochinon und 0,17 g 2,6-Di-tert.-Butyl-p-kresol bei Raumtemperatur gemischt. Als Katalysator wurden 0,03 g Dibutylzinndilaurat zugegeben. Das Reaktionsgemisch wurde 15 h bei 70°C gerührt, bis der NCO-Wert der Reaktionsmischung 0,08% betrug.

### Beispiel 2

In einem Dreihalskolben mit Rückflusskühler und Rührer wurden 354,54 g allophanatgruppenhaltiges Polyisocyanat, 607,84 g Sartomer® SR444D (Handelsprodukt der Firma CrayValley Sartomer, Pentaerythrit tri/tetra acrylat-Gemisch mit OH-Zahl = 120 mg KOH/g), 0,48 g Methylhydrochinon und 0,96 g 2,6-Di-tert.-Butyl-p-kresol bei Raumtemperatur gemischt. Als Katalysator wurden in die gut durchmischte Vorlage 0,19 g Dibutylzinndilaurat zugegeben. Dabei trat eine schwach exotherme Reaktion ein, so dass die Innentemperatur auf ca. 30°C anstieg. Das Reaktionsgemisch wurde 8 h bei 70°C gerührt, bis der NCO-Wert der Reaktionsmischung 0,4% betrug.

### Beispiel 3 (Vergleich)

In einem Dreihalskolben mit Rückflusskühler und Rührer wurden 709,07 g allophanatgruppenhaltiges Polyisocyanat, 374,76 g Hydroxypropylmethacrylat, 0,54 g Methylhydrochinon und 1,08 g 2,6-Di-tert.-Butyl-p-kresol bei Raumtemperatur gemischt. Als Katalysator wurden in die gut durchmischte Vorlage 0,22 g Dibutylzinndilaurat zugegeben. Dabei trat eine schwach exotherme Reaktion ein, so dass die Innentemperatur auf ca. 40°C anstieg. Das Reaktionsgemisch wurde 10,5 h bei 75°C gerührt, bis der NCO-Wert der Reaktionsmischung 0,16% betrug.

### Beispiel 4

In einem Dreihalskolben mit Rückflusskühler und Rührer wurden 81,82 g allophanatgruppenhaltiges Polyisocyanat, 50,00 g CAPA® 212 (Polycaprolactondiol der Firma Solvay, OH-Zahl = 112 mg KOH/g), 108,95 g Pentaerythrit tri/tetra acrylat (Handelsprodukt der Firma UCB, OH-Zahl = 103 mg KOH/g), 0,12 g Methylhydrochinon und 0,24 g 2,6-Di-tert.-Butyl-p-kresol bei Raumtemperatur in 80,26 g Butylacetat gemischt. Als Katalysator wurden in die gut durchmischte Vorlage 0,10 g Dibutylzinndilaurat zugegeben. Das Reaktionsgemisch wurde 7 h bei 75-86°C gerührt, bis der NCO-Wert der Reaktionsmischung 0,26% betrug. Zur Umsetzung der restlichen NCO-Gruppen wurde 1 g Methanol zugegeben. Nach weiteren 90 Minuten Rühren bei 75-85°C wurde ein NCO-Wert von 0% erhalten.

### Beispiel 5

In einem Dreihalskolben mit Rückflusskühler und Rührer wurden 81,82, g allophanatgruppenhaltiges Polyisocyanat, 145,74 g CAPA® 231 (Polycaprolactondiol der Firma Solvay, OH-Zahl = 38,5 mg KOH/g), 108,95 g Pentaerythrit tri/tetra acrylat (Handelsprodukt der Firma UCB, OH-Zahl = 103 mg KOH/g), 0,17 g Methylhydrochinon und 0,34 g 2,6-Di-tert.-Butyl-p-kresol bei Raumtemperatur in 112,16 g Butylacetat gemischt. Als Katalysator wurden in die gut durchmischte Vorlage 0,13 g Dibutylzinndilaurat zugegeben. Das Reaktionsgemisch wurde 6 h bei 75-86°C gerührt, bis der NCO-Wert der Reaktionsmischung 0,26% betrug. Zur Umsetzung der restlichen NCO-Gruppen wurde 1 g Methanol zugegeben und mit 33,00 g Butylacetat verdünnt. Nach weiteren 90 Minuten Rühren bei 75-85°C wurde ein NCO-Wert von 0% erhalten.

### Beispiel 6

In einem Dreihalskolben mit Rückflusskühler und Rührer wurden 40,91 g allophanatgruppenhaltiges Polyisocyanat, 100,19 g CAPA® 240 (Polycaprolactondiol der Firma Solvay, OH-Zahl = 28 mg KOH/g), 54,47 g Pentaerythrit tri/tetra acrylat (Handelsprodukt der Firma UCB, OH-Zahl = 103 mg KOH/g), 0,10 g Methylhydrochinon und 0,20 g 2,6-Di-tert.-Butyl-p-kresol bei Raumtemperatur in 83,82 g Butylacetat gemischt. Als Katalysator wurden in die gut durchmischte Vorlage 0,08 g Dibutylzinndilaurat zugegeben. Das Reaktionsgemisch wurde 6 h bei 75-86°C gerührt, bis der NCO-Wert der Reaktionsmischung 0,2% betrug. Zur Umsetzung der restlichen NCO-Gruppen wurde 1 g Methanol zugegeben und mit 21,49 g Butylacetat verdünnt. Nach weiteren 90 Minuten Rühren bei 75-85°C wurde ein NCO-Wert von 0% erhalten.

### Beispiel 7

In einem Dreihalskolben mit Rückflusskühler und Rührer wurden 402,86 g allophanatgruppenhaltiges Polyisocyanat, 32,18 g Butandiol, 0,41 g Methylhydrochinon und 0,82 g 2,6-Di-tert.-Butyl-p-kresol bei Raumtemperatur in 206,00 g Butylacetat gemischt. Als Katalysator wurden in die gut durchmischte Vorlage 0,17 g Dibutylzinndilaurat zugegeben. Dabei trat eine schwach exotherme Reaktion ein, so dass die Innentemperatur innerhalb von 20 Minuten auf ca. 50°C anstieg. Das Reaktionsgemisch wurde 1,5 h bei 75°C gerührt, bis der NCO-Wert der Reaktionsmischung 4,28% betrug. Dann erfolgte die Zugabe von 389,09 g Pentaerythrit tri/tetra acrylat (Handelsprodukt der Firma UCB, OH-Zahl = 103 mg KOH/g) und 0,16 g Dibutylzinndilaurat. Nach 6 h Rühren bei 75°C wurde ein NCO-Wert von 0,44% erreicht. Zur Umsetzung der restlichen NCO-Gruppen wurden 3,50 g Methanol zugegeben. Nach Lagerung über Nacht bei Raumtemperatur wurde ein NCO-Wert von 0% erhalten.

### Beispiel 8

In einem Dreihalskolben mit Rückflusskühler und Rührer wurden 402,86 g allophanatgruppenhaltiges Polyisocyanat, 357,14 g PolyTHF® 1000 (Polytetrahydrofuran der Firma BASF, OH-Zahl = 112,21 mg KOH/g), 0,57 g Methylhydrochinon und 1,15 g 2,6-Di-tert.-Butyl-p-kresol bei Raumtemperatur in 287,00 g Butylacetat gemischt. Als Katalysator wurden in die gut durchmischte Vorlage 0,30 g Dibutylzinndilaurat zugegeben. Dabei trat eine schwach exotherme Reaktion ein, so dass die Innentemperatur innerhalb von 30 Minuten auf ca. 40°C anstieg. Das Reaktionsgemisch wurde 1,5 h bei 75°C gerührt, bis der NCO-Wert der Reaktionsmischung 2,70% betrug. Dann erfolgte die Zugabe von 389,09 g Pentaerythrit tri/tetra acrylat (Handelsprodukt der Firma UCB, OH-Zahl = 103 mg KOH/g) und 0,16 g Dibutylzinndilaurat. Nach 7 h Rühren bei 75°C wurde ein NCO-Wert von 0,27% erreicht. Zur Umsetzung der restlichen NCO-Gruppen wurden 3,00 g Methanol zugegeben und mit 205,00 g Butylacetat verdünnt. Nach Lagerung über Nacht bei Raumtemperatur wurde ein NCO-Wert von 0% erhalten.

### Beispiel 9

In einem Dreihalskolben mit Rückflusskühler und Rührer wurden 402,86 g allophanatgruppenhaltiges Polyisocyanat, 714,30 g PolyTHF® 2000 (Polytetrahydrofuran der Firma BASF, OH-Zahl = 56,11 mg KOH/g), 0,75 g Methylhydrochinon und 1,51 g 2,6-Di-tert.-Butyl-p-kresol bei Raumtemperatur gemischt. Als Katalysator wurden in die gut durchmischte Vorlage 0,45 g Dibutylzinndilaurat zugegeben. Dabei trat eine schwach exotherme Reaktion ein, so dass die Innentemperatur innerhalb von 10 Minuten auf ca. 66°C anstieg. Das Reaktionsgemisch wurde mit 279,00 g Butylacetat verdünnt und 1,5 h bei 75°C gerührt, bis der NCO-Wert der Reaktionsmischung 1,90% betrug. Dann erfolgte die Zugabe von 389,09 g Pentaerythrit tri/tetra acrylat (Handelsprodukt der Firma UCB, OH-Zahl = 103 mg KOH/g), 0,16 g Dibutylzinndilaurat und 223,00 g Butylacetat. Nach 7 h Rühren bei 75°C wurde ein NCO-Wert von 0,15% erreicht. Zur Umsetzung der restlichen NCO-Gruppen wurden 2,30 g Methanol zugegeben. Nach Lagerung über Nacht bei Raumtemperatur wurde ein NCO-Wert von 0% erhalten.

### Beispiel 10

In einem Dreihalskolben mit Rückflusskühler und Rührer wurden 338,40 g allophanatgruppenhaltiges Polyisocyanat, 300,00 g CAPA® 212 (Polycaprolactondiol der Firma Solvay, OH-Zahl = 112 mg KOH/g), 326,84 g Pentaerythrit tri/tetra acrylat (Handelsprodukt der Firma UCB, OH-Zahl = 103 mg KOH/g), 0,48 g Methylhydrochinon und 0,97 g 2,6-Di-tert.-Butyl-p-kresol bei Raumtemperatur in 321,75 g Butylacetat gemischt. Als Katalysator wurden in die gut durchmischte Vorlage 0,39 g Dibutylzinndilaurat zugegeben. Das Reaktionsgemisch wurde 6 h bei 75-86°C gerührt, bis der NCO-Wert der Reaktionsmischung 0,25% betrug. Zur Umsetzung der restlichen NCO-Gruppen wurden 4,0 g Methanol zugegeben. Nach weiteren 90 Minuten Rühren bei 75°C und Lagerung über Nacht bei Raumtemperatur wurde ein NCO-Wert von 0% erhalten.

### Beispiel 11

In einem Dreihalskolben mit Rückflusskühler und Rührer wurden 402,86 g allophanatgruppenhaltiges Polyisocyanat, 42,22 g Hexandiol, 0,42 g Methylhydrochinon und 0,83 g 2,6-Di-tert.-Butyl-p-kresol bei Raumtemperatur gemischt. Als Katalysator wurden in die gut durchmischte Vorlage 0,18 g Dibutylzinndilaurat zugegeben. Dabei trat eine schwach exotherme Reaktion ein, so dass die Innentemperatur innerhalb von 20 Minuten auf ca. 30°C anstieg. Das Reaktionsgemisch wurde 1,5 h bei 75°C gerührt, bis der NCO-Wert der Reaktionsmischung 6,55% betrug. Dann erfolgte die Zugabe von 389,09 g Pentaerythrit tri/tetra acrylat (Handelsprodukt der Firma UCB, OH-Zahl = 103 mg KOH/g), 208,5 g Butylacetat und 0,16 g Dibutylzinndilaurat. Nach 6 h Rühren bei 75°C wurde ein NCO-Wert von 0,24% erreicht. Zur Umsetzung der restlichen NCO-Gruppen wurden 1,9 g Methanol zugegeben und weitere 2 h bei 75°C gerührt. Nach Lagerung über Nacht bei Raumtemperatur wurde ein NCO-Wert von 0% erhalten.

### Beispiel 12

In einem Dreihalskolben mit Rückflusskühler und Rührer wurden 402,86 g allophanatgruppenhaltiges Polyisocyanat, 90,36 g Isopropylidendicyclohexanol, 0,44 g Methylhydrochinon und 0,88 g 2,6-Di-tert.-Butyl-p-kresol bei Raumtemperatur mit 220,58 g Butylacetat gemischt. Als Katalysator wurden in die gut durchmischte Vorlage 0,20 g Dibutylzinndilaurat zugegeben. Das Reaktionsgemisch wurde 1,5 h bei 75°C gerührt, bis der NCO-Wert der Reaktionsmischung 3,70% betrug. Dann erfolgte die Zugabe von 389,09 g Pentaerythrit tri/tetra acrylat (Handelsprodukt der Firma UCB, OH-Zahl = 103 mg KOH/g) und 0,16 g Dibutylzinndilaurat. Nach 7 h Rühren bei 75°C wurde ein NCO-Wert von 0,15% erreicht. Zur Umsetzung der restlichen NCO-Gruppen wurden 1,3 g Methanol zugegeben, mit 158,00 g Butylacetat verdünnt und weitere 2 h bei 75°C gerührt. Nach Lagerung über Nacht bei Raumtemperatur wurde ein NCO-Wert von 0% erhalten.

### Beispiel 13

In einem Dreihalskolben mit Rückflusskühler und Rührer wurden 402,86 g allophanatgruppenhaltiges Polyisocyanat, 51,50 g Cyclohexan-1,4-dimethanol, 0,41 g Methylhydrochinon und 0,84 g 2,6-Di-tert.-Butyl-p-kresol bei Raumtemperatur mit 210,90 g Butylacetat gemischt. Als Katalysator wurden in die gut durchmischte Vorlage 0,18 g Dibutylzinndilaurat zugegeben. Dabei trat eine schwach exotherme Reaktion ein, so dass die Innentemperatur innerhalb von 20 Minuten auf ca. 48°C anstieg. Das Reaktionsgemisch wurde 1 h bei 75°C gerührt, bis der NCO-Wert der Reaktionsmischung 4,21% betrug. Dann erfolgte die Zugabe von 389,09 g Pentaerythrit tri/tetra acrylat (Handelsprodukt der Firma UCB, OH-Zahl = 103 mg KOH/g) und 0,18 g Dibutylzinndilaurat. Nach 7 h Rühren bei 75°C wurde ein NCO-Wert von 0,32% erreicht. Zur Umsetzung der restlichen NCO-Gruppen wurden 2,6 g Methanol zugegeben und weitere 2 h bei 75°C gerührt. Nach Lagerung über Nacht bei Raumtemperatur wurde ein NCO-Wert von 0% erhalten.

### Beispiel 14

In einem Dreihalskolben mit Rückflusskühler und Rührer wurden 402,86 g allophanatgruppenhaltiges Polyisocyanat, 37,14 g Neopentylglykol, 0,41 g Methylhydrochinon und 0,83 g 2,6-Di-tert.-Butyl-p-kresol bei Raumtemperatur mit 207,30 g Butylacetat gemischt. Als Katalysator wurden in die gut durchmischte Vorlage 0,18 g Dibutylzinndilaurat zugegeben. Dabei trat eine schwach exotherme Reaktion ein, so dass die Innentemperatur innerhalb von 20 Minuten auf ca. 30°C anstieg. Das Reaktionsgemisch wurde 1 h bei 75°C gerührt, bis der NCO-Wert der Reaktionsmischung 4,38% betrug. Dann erfolgte die Zugabe von 389,09 g Pentaerythrit tri/tetra acrylat (Handelsprodukt der Firma UCB, OH-Zahl = 103 mg KOH/g) und 0,16 g Dibutylzinndilaurat. Nach 7 h Rühren bei 75°C wurde ein NCO-Wert von 0,40% erreicht. Zur Umsetzung der restlichen NCO-Gruppen wurden 3,2 g Methanol zugegeben und weitere 2 h bei 75°C gerührt. Nach Lagerung über Nacht bei Raumtemperatur wurde ein NCO-Wert von 0% erhalten.

### Beispiel 15 (Vergleich)

In einem Dreihalskolben mit Rückflusskühler und Rührer wurden 681,75 g allophanatgruppenhaltiges Polyisocyanat, 290,00 g Hydroxyethylacrylat, 0,49 g Methylhydrochinon und 0,97 g 2,6-Di-tert.-Butyl-p-kresol bei Raumtemperatur gemischt. Als Katalysator wurden 0,19 g Dibutylzinndilaurat zugegeben. Das Reaktionsgemisch wurde 20 h bei 75°C gerührt, bis der NCO-Wert der Reaktionsmischung <0,1% betrug.

### Beispiel 16 (Vergleich)

In einem Dreihalskolben mit Rückflusskühler und Rührer wurden 681,75 g allophanatgruppenhaltiges Polyisocyanat, 360,00 g Hydroxybutylacrylat, 0,52 g Methylhydrochinon und 1,04 g 2,6-Di-tert.-Butyl-p-kresol bei Raumtemperatur gemischt. Als Katalysator wurden 0,21 g Dibutylzinndilaurat zugegeben. Das Reaktionsgemisch wurde 20 h bei 75°C gerührt, bis der NCO-Wert der Reaktionsmischung <0,1% betrug.

### Anwendungsbeispiele

Bestimmung der anwendungstechnischen Eigenschaften Pendeldämpfung, Erichsen Tiefung und Kratzfestigkeit.

Die Bestimmung der Pendeldämpfung erfolgte analog DIN 53157. Hierzu wurden die strahlungshärtbaren Zusammensetzungen mit einer Nassfilmdicke von 400 µm auf Glas aufgebracht. Die Nassfilme wurden zunächst 15 Minuten bei Raumtemperatur abgelüftet und anschließend 20 Minuten bei 100°C getrocknet. Die Aushärtung der auf diese Weise erhaltenen Filme erfolgte an einer IST Beschichtungsanlage (Typ M 40 2x1-R-IR-SLC-So inert) mit 2 UV-Strahlern (Quecksilberhochdrucklampen Typ M 400 U2H und Typ M 400 U2HC) und einer Förderbandgeschwindigkeit von 10 m/min unter Stickstoffatmosphäre (gehalt an O₂ ≤ 500 ppm). Die Strahlendosis betrug ca. 1900 mJ/cm².

Die Ermittlung der Erichsen-Tiefung erfolgte analog DIN 53156. Hierzu wurde mittels eines Kastenrakels die jeweilige erfindungsgemäße Zubereitung mit einer Nassfilmdicke von 200 µm auf BONDER-Blech 132 aufgebracht. Zur Aushärtung wurde in der oben beschriebenen Weise belichtet. Anschließend wurde die Erichsen-Tiefung durch Eindrücken einer Metallkugel in die nicht beschichtete Seite des Blechs bestimmt. Hohe Werte bedeuten hohe Flexibilität.

Die Bestimmung der Kratzfestigkeit erfolgte mit dem Scotch-Brite-Test nach Lagerung für 7 Tage im Klimaraum. Im Scotch-Brite-Test wird als Prüfkörper ein 3 x 3 cm großer Siliciumcarbid modifizierter Faservlies (Scotch Brite SUFN, Firma 3M) an einem Zylinder befestigt. Dieser drückt das Faservlies mit 750 g an die Beschichtung und wird pneumatisch über die Beschichtung bewegt. Die Wegstrecke der Auslenkung beträgt 7 cm. Nach 10 bzw. 50 Doppelhüben (DH) wird im mittleren Bereich der Beanspruchung der Glanz (Achtfachbestimmung) analog DIN 67530 bei einem Einfallwinkel von 20° gemessen. Der Restglanzwert in Prozent ergibt sich aus dem Verhältnis Glanz nach Belastung gegenüber Anfangsglanz. Nach 50 Doppelhüben wird mit einem weichen Tuch, das mit Waschbenzin getränkt ist zweimal leicht abgewischt und nochmals der Restglanz gemessen. Anschließend wird der Reflow nach 2 h bei 80°C im Trockenschrank durch Messung des Restglanzes bestimmt.

Die Herstellung der strahlungshärtbaren Masse erfolgte durch intensive Mischung von 100 Gewichtsteilen der unter Beispiel 1 bis 16 erhaltenen Urethanacrylaten mit 4 Gewichtsteilen 1-Hydroxy-cyclohexyl-phenylketon (handelsüblicher Photoinitiator Irgacure® 184 der Firma Ciba Spezialitätenchemie)

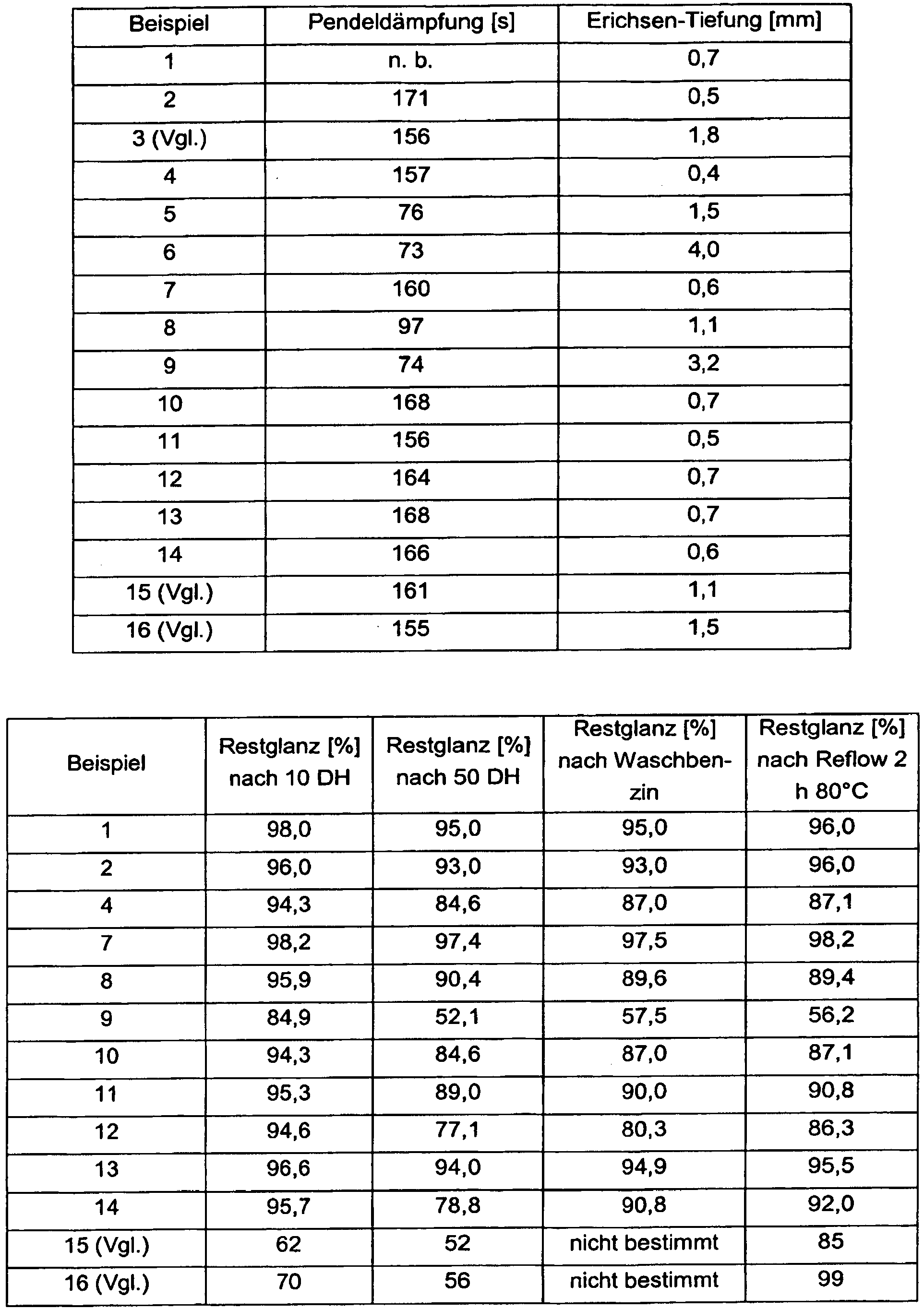

## Patentansprüche

1. Allophanatgruppenhaltige Polyurethane, enthaltend als Aufbaukomponenten
(a) mindestens ein organisches aliphatisches, aromatisches oder cycloaliphatisches Di- oder Polyisocyanat,
(b) mindestens zwei unterschiedliche Verbindungen (b1) und (b2) mit jeweils mindestens einer gegenüber Isocyanat reaktiven Gruppe und mindestens einer radikalisch polymerisierbaren ungesättigten Gruppe, wobei es sich bei den radikalisch polymerisierbaren ungesättigten Gruppen um Ester von α,β-ungesättigten Carbonsäuren handelt,
(c) 0 - 30 mol% bezogen auf gegenüber Isocyanat reaktiven Gruppen mindestens einer Verbindung mit genau zwei gegenüber Isocyanat reaktiven Gruppen,
(d) gegebenenfalls mindestens eine Verbindung mit mindestens drei gegenüber Isocyanat reaktiven Gruppen und
(e) gegebenenfalls mindestens eine Verbindung mit genau einer gegenüber Isocyanat reaktiven Gruppe,
wobei die Komponente (b2) genau eine gegenüber Isocyanat reaktive Gruppe und mindestens zwei radikalisch polymerisierbare ungesättigte Gruppen aufweist.

2. Polyurethane gemäß Anspruch 1, **dadurch gekennzeichnet, daß** der Gehalt an Allophanatgruppen (berechnet als C₂N₂HO₃ = 101 g/mol) 1 bis 28 Gew% beträgt.

3. Polyurethane gemäß einem der Ansprüche 1 oder 2, **dadurch gekennzeichnet, daß** von den Verbindungen (b1) und (b2) mit jeweils mindestens einer gegenüber Isocyanat reaktiven Gruppe und mindestens einer radikalisch polymerisierbaren ungesättigten Gruppe, die Aufbaukomponenten der erfindungsgemäßen Polyurethane bilden, mindestens 20 mol% an Allophanatgruppen gebunden sind.

4. Polyurethane gemäß einem der vorstehenden Ansprüche, **dadurch gekennzeichnet, daß** der Gehalt an Oxadiazintriongruppen in den eingesetzten Isocyanaten (berechnet als C₃N₂O₄ = 128 g/mol) weniger als 15 Gew% beträgt.

5. Polyurethane gemäß einem der vorstehenden Ansprüche, **dadurch gekennzeichnet, daß** der Gehalt an Oxadiazintriongruppen in den eingesetzten Isocyanaten (berechnet als C₃N₂O₄ = 128 g/mol) weniger als 0,7 Gew% beträgt.

6. Polyurethane gemäß einem der vorstehenden Ansprüche, **dadurch gekennzeichnet, daß** der Gehalt an Oxadiazintriongruppen in den eingesetzten Isocyanaten
(berechnet als C₃N₂O₄ = 128 g/mol) zwischen 0,2 und 0,6 Gew% beträgt.

7. Polyurethane gemäß einem der vorstehenden Ansprüche, **dadurch gekennzeichnet, daß** der Gehalt an freien Isocyanatgruppen, berechnet als NCO = 42 g/mol, weniger als 0,5 Gew% beträgt.

8. Polyurethane gemäß einem der vorstehenden Ansprüche, **dadurch gekennzeichnet, daß** die Komponente (a) ausgewählt ist aus der Gruppe bestehend aus Hexamethylendiisocyanat, 1,3-Bis(isocyanatomethyl)cyclohexan, Isophorondiisocyanat und Di(isocyanatocyclohexyl)methan.

9. Polyurethane gemäß einem der vorstehenden Ansprüche, **dadurch gekennzeichnet, daß** die Komponente (b1) genau eine gegenüber Isocyanat reaktiven Gruppe und genau eine radikalisch polymerisierbare ungesättigte Gruppe aufweist.

10. Polyurethane gemäß einem der vorstehenden Ansprüche, **dadurch gekennzeichnet, daß** die Komponente (b1) ausgewählt ist aus der Gruppe bestehend aus 2-Hydroxyethylacrylat, 2-Hydroxyethylmethacrylat, 2- oder 3-Hydroxypropylacrylat und 1,4-Butandiolmonoacrylat.

11. Polyurethane gemäß einem der vorstehenden Ansprüche, **dadurch gekennzeichnet, daß** die Komponente (b2) ausgewählt ist aus der Gruppe bestehend aus dem 1,2- oder 1,3-Diacrylat von Glycerin, Trimethylolpropandiacrylat, Pentaerythrittriacrylat, Ditrimethylolpropantriacrylat und Dipentaerythritpentaacrylat.

12. Polyurethane gemäß einem der vorstehenden Ansprüche, **dadurch gekennzeichnet, daß** es sich bei der Komponente (c) um einen cycloaliphatischen Alkohol handelt.

13. Polyurethane gemäß einem der Ansprüche 1 bis 11, **dadurch gekennzeichnet, daß** es sich bei der Komponente (c) um einen aliphatischen Alkohol mit 6 bis 20 Kohlenstoffatomen handelt.

14. Polyurethane gemäß einem der Ansprüche 1 bis 11, **dadurch gekennzeichnet, daß** es sich bei der Komponente (c) um einen aliphatischen Alkohol mit 1 bis 4 Kohlenstoffatomen handelt.

15. Polyurethane gemäß einem der vorstehenden Ansprüche, **dadurch gekennzeichnet, daß** die molare Zusammensetzung (a):(b1):(b2):(c):(d):(e) pro 1 mol reaktive Isocycanatgruppen in (a)
(b1) 1 - 50 mol% gegenüber Isocyanat reaktive Gruppen,
(b2) 1 - 50 mol% gegenüber Isocyanat reaktive Gruppen,
(c) 0 - 30 mol% an gegenüber Isocyanat reaktiven Gruppen,
(d) 0-10 mol% an gegenüber Isocyanat reaktiven Gruppen,
(e) 0 - 5 mol% an gegenüber Isocyanat reaktiven Gruppen,
beträgt, mit der Maßgabe, daß die Summe der gegenüber Isocyanat reaktiven Gruppen der Anzahl der Isocyanatgruppen in (a) entspricht.

16. Strahlungshärtbare Beschichtungsmassen, enthaltend
- mindestens ein Polyurethan gemäß einem der Ansprüche 1 bis 15,
- gegebenenfalls mindestens eine Verbindung mit einer oder mehr als einer radikalisch polymerisierbaren Doppelbindung,
- gegebenenfalls mindestens einen Photoinitiator und
- gegebenenfalls weitere lacktypische Additive.

17. Strahlungshärtbare Beschichtungsmasse, enthaltend
- - mindestens ein erfindungsgemäßes Polyurethan gemäß einem der Ansprüche 1 bis 15 in dem freie Isocyanatgruppen enthalten sind,
- mindestens eine Verbindung mit einer oder mehr als einer radikalisch polymerisierbaren Doppelbindung,
- gegebenenfalls mindestens einen Photoinitiator,
- mindestens eine Verbindungen mit mehr als einer Hydroxy- und/oder Aminogruppe,
- gegebenenfalls mindestens eine Verbindungen mit einer Hydroxy- oder Aminogruppe,
- gegebenenfalls mindestens eine organometallische Zinnverbindung oder mindestens eine Cäsiumverbindung und
- gegebenenfalls weitere lacktypische Additive.

18. Verwendung der Polyurethane gemäß einem der Ansprüche 1 bis 15 zur Beschichtung von Holz, Holzfurnier, Papier, Pappe, Karton, Textil, Leder, Vlies, Kunststoffoberflächen, Glas, Keramik, mineralischen Baustoffen, Metallen oder beschichteten Metallen.

19. Verwendung der Polyurethane gemäß einem der Ansprüche 1 bis 15 in Beschichtungsmitteln in Grundierungen, Füllern, pigmentierten Decklacken und Klarlacken im Bereich Autoreparatur- oder Großfahrzeuglackierung.

## Claims

1. A polyurethane containing allophanate groups and comprising, as components,
(a) at least one organic aliphatic, aromatic or cycloaliphatic di- or polyisocyanate,
(b) at least two different compounds (b1) and (b2) having in each case at least one group reactive toward isocyanate and at least one unsaturated group capable of free radical polymerization, the unsaturated groups capable of free radical polymerization being esters of α, β-unsaturated carboxylic acids,
(c) 0-30 mol%, based on groups reactive toward isocyanate, of at least one compound having exactly two groups reactive toward isocyanate,
(d) optionally at least one compound having at least three groups reactive toward isocyanate and
(e) optionally at least one compound having exactly one group reactive toward isocyanate,
where the component (b2) has exactly one group reactive toward isocyanate and at least two unsaturated groups capable of free radical polymerization.

2. The polyurethane according to claim 1, wherein the content of allophanate groups (calculated as C₂N₂HO₃ = 101 g/mol) is from 1 to 28% by weight.

3. The polyurethane according to either of claims 1 and 2, wherein at least 20 mol% of the compounds (b1) and (b2) having in each case at least one group reactive toward isocyanate and at least one unsaturated group capable of free radical polymerization, which form components of the polyurethanes according to the invention, are bonded to allophanate groups.

4. The polyurethane according to any of the preceding claims, wherein the content of oxadiazinetrione groups in the isocyanates used (calculated as C₃N₂O₄ = 128 g/mol) is less than 15% by weight.

5. The polyurethane according to any of the preceding claims, wherein the content of oxadiazinetrione groups in the isocyanates used (calculated as C₃N₂O₄ = 128 g/mol) is less than 0.7% by weight.

6. The polyurethane according to any of the preceding claims, wherein the content of oxadiazinetrione groups in the isocyanates used (calculated as C₃N₂O₄ = 128 g/mol) is from 0.2 to 0.6% by weight.

7. The polyurethane according to any of the preceding claims, wherein the content of free isocyanate groups, calculated as NCO = 42 g/mol, is less than 0.5% by weight.

8. The polyurethane according to any of the preceding claims, wherein the component (a) is selected from the group consisting of hexamethylene diisocyanate, 1,3-bis(isocyanatomethyl)cyclohexane, isophorone diisocyanate and di(isocyanatocyclohexyl)methane.

9. The polyurethane according to any of the preceding claims, wherein the component (b1) has exactly one group reactive toward isocyanate and exactly one unsaturated group capable of free radical polymerization.

10. The polyurethane according to any of the preceding claims, wherein the component (b1) is selected from the group consisting of 2-hydroxyethyl acrylate, 2-hydroxyethyl methacrylate, 2- or 3-hydroxypropyl acrylate and 1,4-butanediol monoacrylate.

11. The polyurethane according to any of the preceding claims, wherein the component (b2) is selected from the group consisting of the 1,2- or 1,3-diacrylate of glycerol, trimethylolpropane diacrylate, pentaerythrityl triacrylate, ditrimethylolpropane triacrylate and dipentaerythrityl pentaacrylate.

12. The polyurethane according to any of the preceding claims, wherein the component (c) is a cycloaliphatic alcohol.

13. The polyurethane according to any of claims 1 to 11, wherein the component (c) is an aliphatic alcohol having 6 to 20 carbon atoms.

14. The polyurethane according to any of claims 1 to 11, wherein the component (c) is an aliphatic alcohol having 1 to 4 carbon atoms.

15. The polyurethane according to any of the preceding claims, wherein the molar composition (a) : (b1) : (b2) : (c) : (d) : (e) per 1 mol of reactive isocyanate groups in (a) is
(b1) 1 - 50 mol% of groups reactive toward isocyanate,
(b2) 1 - 50 mol% of groups reactive toward isocyanate,
(c) 0 - 50 mol% of groups reactive toward isocyanate,
(d) 0 - 10 mol% of groups reactive toward isocyanate,
(e) 0 - 5 mol% of groups reactive toward isocyanate,
with the proviso that the sum of the groups reactive toward isocyanate corresponds to the number of isocyanate groups in (a).

16. A radiation-curable coating material comprising
- at least one polyurethane according to any of claims 1 to 15,
- optionally at least one compound having one or more than one double bond capable of free radical polymerization,
- optionally at least one photoinitiator and
- optionally further additives typical of coatings.

17. A radiation-curable coating material comprising
- at least one polyurethane according to the invention and according to any of claims 1 to 15 which comprises free isocyanate groups,
- at least one compound having one or more than one double bond capable of free radical polymerization,
- optionally at least one photoinitiator,
- at least one compound having more than one hydroxyl and/or amino group,
- optionally at least one compound having a hydroxyl or amino group,
- optionally at least one organometallic tin compound or at least one cesium compound and
- optionally further additives typical of coatings.

18. The use of the polyurethanes according to any of claims 1 to 15 for the coating of wood, wood veneer, paper, board, cardboard, textile, leather, nonwovens, plastics surfaces, glass, ceramic, mineral building materials, metals or coated metals.

19. The use of the polyurethanes according to any of claims 1 to 15 in coating materials in primers, fillers, pigmented top coats and clear coats in the area of automotive repair coating or the coating of large vehicles.

## Revendications

1. Polyuréthanes contenant des groupes allophanate, contenant comme composants constitutifs
(a) au moins un diisocyanate ou polyisocyanate organique aliphatique, aromatique ou cycloaliphatique,
(b) au moins deux composés (b1) et (b2) différents présentant à chaque fois au moins un groupe réactif par rapport à isocyanate et au moins un groupe insaturé polymérisable par voie radicalaire, les groupes insaturés polymérisables par voie radicalaire étant des esters d'acides carboxyliques α,ß-insaturés,
(c) 0-30% en mole, par rapport aux groupes réactifs par rapport à isocyanate, d'au moins un composé présentant exactement deux groupes réactifs par rapport à isocyanate,
(d) le cas échéant au moins un composé présentant au moins trois groupes réactifs par rapport à isocyanate et
(e) le cas échéant au moins un composé présentant exactement un groupe réactif par rapport à isocyanate,
le composant (b2) présentant exactement un groupe réactif par rapport à isocyanate et au moins deux groupes insaturés polymérisables par voie radicalaire.

2. Polyuréthanes selon la revendication 1, **caractérisés en ce que** la teneur en groupes allophanate (calculés sous forme de C₂N₂HO₃ = 101 g/mole) est de 1 à 28% en poids.

3. Polyuréthanes selon l'une quelconque des revendications 1 ou 2, **caractérisés en ce que** parmi les composés (b1) et (b2) présentant à chaque fois au moins un groupe réactif par rapport à isocyanate et au moins un groupe insaturé polymérisable par voie radicalaire, qui forment les composants constitutifs des polyuréthanes selon l'invention, au moins 20% en mole sont liés à des groupes allophanate.

4. Polyuréthanes selon l'une quelconque des revendications précédentes, **caractérisés en ce que** la teneur en groupes oxadiazinetrione dans les isocyanates utilisés (calculés sous forme de C₃N₂O₄ = 128 g/mole) est inférieure à 15% en poids.

5. Polyuréthanes selon l'une quelconque des revendications précédentes, **caractérisés en ce que** la teneur en groupes oxadiazinetrione dans les isocyanates utilisés (calculés sous forme de C₃N₂O₄ = 128 g/mole) est inférieure à 0,7% en poids.

6. Polyuréthanes selon l'une quelconque des revendications précédentes, **caractérisés en ce que** la teneur en groupes oxadiazinetrione dans les isocyanates utilisés (calculés sous forme de C₃N₂O₄ = 128 g/mole) est située entre 0,2 et 0,6% en poids.

7. Polyuréthanes selon l'une quelconque des revendications précédentes, **caractérisés en ce que** la teneur en groupes isocyanate libres, calculés sous forme de NCO = 42 g/mole, est inférieure à 0,5% en poids.

8. Polyuréthanes selon l'une quelconque des revendications précédentes, **caractérisés en ce que** le composant (a) est choisi dans le groupe constitué par le diisocyanate d'hexaméthylène, le 1,3-bis(isocyanatométhyl)cyclohexane, le diisocyanate d'isophorone et le di(isocyanatocyclohexyl)méthane.

9. Polyuréthanes selon l'une quelconque des revendications précédentes, **caractérisés en ce que** le composant (b1) présente exactement un groupe réactif par rapport à isocyanate et exactement un groupe insaturé polymérisable par voie radicalaire.

10. Polyuréthanes selon l'une quelconque des revendications précédentes, **caractérisés en ce que** le composant (b1) est choisi dans le groupe constitué par l'acrylate de 2-hydroxyéthyle, le méthacrylate de 2-hydroxyéthyle, l'acrylate de 2-hydroxypropyle ou de 3-hydroxypropyle et le monoacrylate de 1,4-butanediol.

11. Polyuréthanes selon l'une quelconque des revendications précédentes, **caractérisés en ce que** le composant (b2) est choisi dans le groupe constitué par le 1,2-diacrylate ou le 1,3-diacrylate de glycérol, le diacrylate de triméthylolpropane, le triacrylate de pentaérythritol, le triacrylate de ditriméthylolpropane et le pentaacrylate de dipentaérythritol.

12. Polyuréthanes selon l'une quelconque des revendications précédentes, **caractérisés en ce qu'**il s'agit, pour le composant (c), d'un alcool cycloaliphatique.

13. Polyuréthanes selon l'une quelconque des revendications 1 à 11, **caractérisés en ce qu'**il s'agit, pour le composant (c), d'un alcool aliphatique comprenant 6 à 20 atomes de carbone.

14. Polyuréthanes selon l'une quelconque des revendications 1 à 11, **caractérisés en ce qu'**il s'agit, pour le composant (c), d'un alcool aliphatique comprenant 1 à 4 atomes de carbone.

15. Polyuréthanes selon l'une quelconque des revendications précédentes, **caractérisés en ce que** la composition molaire (a) : (b1) : (b2) : (c) : (d) : (e) par 1 mole de groupes isocyanate réactifs dans (a) est de
(b1) 1-50% en mole de groupes réactifs par rapport à isocyanate,
(b2) 1-50% en mole de groupes réactifs par rapport à isocyanate,
(c) 0-30% en mole de groupes réactifs par rapport à isocyanate,
(d) 0-10% en mole de groupes réactifs par rapport à isocyanate,
(e) 0-5% en mole de groupes réactifs par rapport à isocyanate,
à condition que la somme des groupes réactifs par rapport à isocyanate corresponde au nombre de groupes isocyanate dans (a).

16. Masses de revêtement durcissables sous l'effet d'un rayonnement, contenant
- au moins un polyuréthane selon l'une quelconque des revendications 1 à 15,
- le cas échéant au moins un composé présentant une ou plus d'une double liaison polymérisable par voie radicalaire,
- le cas échéant au moins un photo-initiateur et
- le cas échéant d'autres additifs caractéristiques des laques.

17. Masse de revêtement durcissable sous l'effet d'un rayonnement, contenant
- au moins un polyuréthane selon l'invention selon l'une quelconque des revendications 1 à 15 dans lequel sont contenus des groupes isocyanate libres,
- au moins un composé présentant une ou plus d'une double liaison polymérisable par voie radicalaire,
- le cas échéant au moins un photo-initiateur,
- au moins un composé présentant plus d'un groupe hydroxy et/ou amino,
- le cas échéant au moins un composé présentant un groupe hydroxy ou amino,
- le cas échéant au moins un composé organométallique de l'étain ou au moins un composé du césium et
- le cas échéant d'autres additifs caractéristiques des laques.

18. Utilisation des polyuréthanes selon l'une quelconque des revendications 1 à 15 pour le revêtement de bois, de placages en bois, de papier, de carton-pâte, de carton, de textile, de cuir, de non-tissé, de surfaces en matériau synthétique, de verre, de céramique, de matériaux de construction minéraux, de métaux ou de métaux revêtus.

19. Utilisation des polyuréthanes selon l'une quelconque des revendications 1 à 15 dans des agents de revêtement, dans des apprêts, des charges, des laques de recouvrement pigmentées et des laques claires dans le domaine du laquage de réparation de voitures ou de véhicules de grande taille.
